# EUROPEAN PATENT APPLICATION

(11) **EP 0 675 585 A1**
(43) Date of publication of application: **04.10.1995**
(21) Application number: 95830079.0
(22) Date of filing: 07.03.1995
(51) Int. Cl.: H02K 5/22

(54) **Cap fitted with external terminal board for electric motors**

(30) Priority: 01.04.1994 IT MC940008 U
(71) Applicant: F.I.M.E. - FABBRICA ITALIANA MOTORI ELETTRICI - S.r.l., I-60022 Castelfidardo (AN) (IT)
(72) Inventor: Bacchiocchi, Alberto, I-60022 Castelfidardo (AN) (IT)
(74) Representative: Baldi, Claudio

(57) **Abstract**

This invention concerns a cap (1) for electric motors fitted with external terminal board (2) designed for rapid connection of cabling wires to the field winding terminals; said cap (1) being fitted with external housings for fixing a terminal board which uses cable holder plugs (3) and U-bolts (4) both fitting into corresponding housings (20) of the terminal board.

## Description

This patent application concerns a cap for electric motors fitted with external terminal board for the connection of field winding terminals and cabling wires.

In particular, the cap according to the invention is designed to facilitate and simplify the connection of cabling wires and field winding terminals of single-phase fixed capacitor induction motors.

In order to better understand the advantages of the cap in question, some mention should be made of the current technique used to realize the above connection.

Currently, when the field winding is ready, each winding terminal is welded to a cabling wire; once the welding spots have been isolated with isolating tape or sleeves, the ends of the cabling wires are press fitted into the coils of the field winding.

The presence of the cabling on the field winding is awkward and interferes with all the subsequent phases of production such as binding of the winding itself, resin-bonding, assembly of the rotor and the supporting caps.

The above technique is also penalised by the fact that although welding is performed by specialised and experienced staff, there is no way of ensuring that it is constantly precise and reliable, to the extent that the majority of motors rejected during the final testing phase, are in fact rejected because the electric connection between cabling and field winding is not reliable.

Attention is furthermore drawn to the fact that said welding connection, which is currently a universal procedure, cannot be automated and will therefore continue to be carried out by highly specialised staff with consequently high processing costs and times.

Having ascertained that the above problems are all directly or indirectly due to the welding of the connection between the cabling wires and the field winding terminals, the author of the invention has decided to resolve these by eliminating the welding and using a special connection terminal board fitted to the exterior of one of the two caps of the motor.

The terminal board in question is a standard model easily available on the market, fitted with cable holder plugs and U-bolts; more specifically, said terminal board involves the use of cable holder plugs with which the end of the first of the two cable wires to be connected, is press fitted into a housing on the terminal board where the end of second wire is also fixed by means of cable holder U-bolts that are press fitted into the housing.

The plastic moulded terminal board used for the model according to the invention, features one or more pins by means of which the same may be quickly and easily hooked into slots on the external wall of one of the caps of the motor.

Thanks to the use of the cap according to the invention, the electric connection between the cabling and the field winding terminals is made when the motor is fully mounted, by means of semi-automatic tooling that fit the cable holder U-bolts and plugs into the corresponding housings on the terminal board.

The binding and resin-bonding processes of the field winding, just like all the other assembly operations of the different components of the motor may in this way be conveniently carried out without the intereference of the cabling.

The motors may consequently be sent for testing and to the warehouse without the cabling, whose connection to the terminal board will be made only when the specific requirements of the customer are known.

Indeed, it should be remembered that the procedure for connecting the cabling to the field winding terminals differs according to the performance required from the motor.

In consideration of the above, it is evident that the use of the cap according to the invention also makes it possible to keep large stocks of finished motors without having to know how the cabling is to be connected to the field winding terminals, in order to meet the specific requests of customers.

The welding connection currently used, obviously excludes this possibility in that the cabling must be welded to the field winding terminals before binding, resin-bonding and coupling to the corresponding rotor.

For major clarity the description of the invention continues with reference to the enclosed drawings, which are intended for purposes of illustration and not in a limiting sense, where:
- Fig. 1 is an axonometric view of a motor fitted with a cap according to the invention, without terminal board, which in this drawing is shown separately.
- Fig. 2 is an axonometric view of a motor fitted with a cap according to the invention, complete with terminal board.

With reference to the above drawings the model in question consists of a cap (1) for electric motors fitted with an external terminal board (2) for rapid connection of the cabling wires to the field winding terminals.

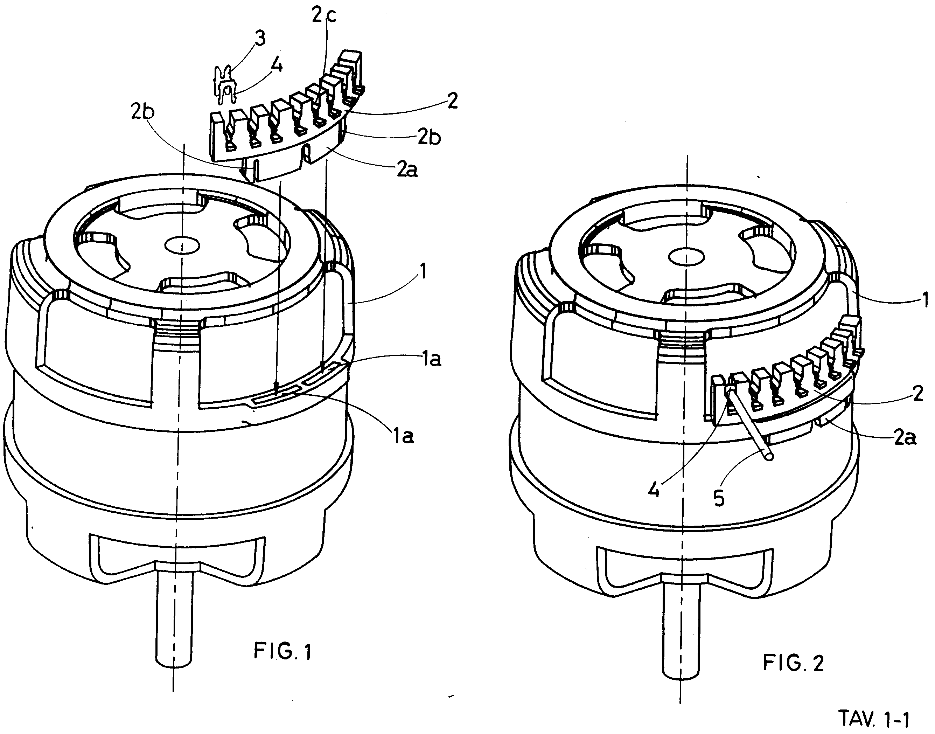

In the preferred embodiment of the invention, illustrated in figures 1 and 2, the terminal board (2) is fixed to the cap (1) by hooking the former to slots on the external face of the latter.

In particular, the curved terminal board (2) features a bottom wing (2a) terminating at the two ends with two elastic spikes (2b) which are fitted and hooked into corresponding slots (1a) on the cap (1).

As previously mentioned, terminal board (2) is a model with cable holder plugs (3) and U-bolts (4), both of which fit into corresponding housings (2c) on the terminal board (2). In the case in question, the winding terminals are fitted at the bottom of the bifurcated ends of the cable holder plugs (3) while the cabling wires (5) are fitted above, and fixed into place by the cable holder U-bolts (4).

## Claims

**1)** A cap for electric motors having an external terminal board for the rapid connection of cabling wires to field winding terminals, characterised by a cap (1) having external fixing housings for a terminal board (2) which uses cable holder plugs (3) and U-bolts (4), both of which are fitted into the corresponding housings (2c) of the terminal board (2).

**2)** A cap for electric motors having an external terminal board for the rapid connection of cabling wires to field winding terminals according to claim 1, characterized in that, in a preferred embodiment of the invention, the curved terminal board (2) features a bottom wing (2a) terminating at the two ends with two elastic spikes (2b) that are fitted and hooked into slots (1a) on the external wall of the cap (1).
